# EUROPÄISCHE PATENTSCHRIFT

(11) **EP 1 344 988 B1**
(45) Veröffentlichungstag und Bekanntmachung des Hinweises auf die Patenterteilung: **13.06.2007**
(21) Anmeldenummer: 03004940.7
(22) Anmeldetag: 10.03.2003
(51) Int. Cl.: F24D 13/02

(54) **Kohlenstoffhaltiger Formkörper zur Beheizung von Räumen**
Carbonaceous molded body for room heating
Corps moulé carbone pour le chauffage de locaux

(30) Priorität: 12.03.2002 DE 10210677
(43) Veröffentlichungstag der Anmeldung: 17.09.2003
(73) Patentinhaber: SGL Carbon AG, 65203 Wiesbaden (DE)
(72) Erfinder: Fischer, Ludger, Dr., 53343 Wachtberg (DE)

(56) Entgegenhaltungen:
- CH-A- 442 558
- DE-A- 2 401 784
- DE-A- 3 603 233
- RU-C- 2 106 325
- US-A- 4 833 300

## Beschreibung

Gegenstand der Erfindung ist eine keramische, elektrisch leitende, aus einer Kohlenstoffmatrix bestehende Platte , die mit einer darauf befindlichen glatten Schutz- und Dekorationsschicht einen flächigen Formkörper als Dekorations- und elektrisches Widerstandsheizelement für die Innenflächen von Räumen bildet.

Raumheizungen mit elektrischen Widerstandselementen in Böden, Wänden oder Decken dieser Räume sind vielfach beschrieben. Häufig werden vielschichtige Elemente eingesetzt, die entweder an den Raumflächen sichtbar sind oder durch weitere Bauelemente abgedeckt sind. Die Vielschichtigkeit ergibt sich aus den unterschiedlichen Aufgaben, die von den Elementen zu erfüllen sind. Beispielsweise sind folgende Aufgaben zu nennen:
- Bereitstellung ausreichender mechanischer Stabilität,
- Beheizbarkeit des Raumes,
- Isolierung von Personen gegen elektrischen Strom,
- Bereitstellung von zweckmäßigen Nutzflächen (Begehbarkeit= Strapazierfestigkeit; Nassfestigkeit; gewünschte optische Wirkung der Wände, Helligkeit der Decke; usw.),
- Dämmung gegen Wärmeabfluss,
- Dämmung gegen (Tritt-)Schall.

Zur Minderung der Komplexität der Anforderungen und der Lösungen wurden auch solche Lösungen realisiert, bei denen das den Raum beheizende elektrische Widerstandselement möglichst dicht an der sichtbaren Oberfläche von Böden, Wänden oder Decken ist. Das bedeutet, dass bei diesen Lösungen einige der Anforderungen nicht mehr durch das Bauteil erbracht werden müssen, z.B. Dämmung gegen Wärmeabfluss oder Dämmung gegen (Tritt-)Schall. Solche Bauteile sind z.B. keramische Fliesen, Beton- bzw. Asbestzementplatten oder kunstharzgebundene Platten, in denen ein elektrischer Widerstand integriert ist. Sie sind vielfach beschrieben:

In JP 55134229 wird eine Platte beschrieben, deren Kern aus einem mit Kunstharzen imprägnierten Gewebe aus Kohlenstofffasern besteht, die mit Bleifäden kontaktiert werden. Der als elektrisches Widerstandselement wirkende Kern der Platte wird von einem isolierenden Material umhüllt. Der vielschichtige Aufbau einer solchen Platte erfordert einen beträchtlichen Herstellungsaufwand.

In anderen Fällen werden eine oder mehrere elektrisch leitende Komponenten z.B. einem Zement u.a. Komponenten beigemischt; diese Mischung härtet hydraulisch in Form einer mechanisch stabilen Platte aus. Nach JP 63131932 werden Zement und Kohlenstofffasern sowie Ruß gemischt und zu einer homogenen Platte geformt und gehärtet. Nach JP 6068962 wird als leitfähige Komponente ein Graphitschaum eingemischt. Nach JP 1313876 werden Kohlenstofffasern lagenweise in eine zementhaltige Platte eingebracht. Nach EP 204672 ist die zementhaltige Platte dreilagig aufgebaut, wobei sich die zentrale Lage von den äußeren durch enthaltenes Graphitpulver unterscheidet. Nach CN 2174661 befindet sich zwischen einer zum Raum hin orientierten Bodenplatte und einer vom Raum weg orientierten Isolationsschicht eine Lage Kleber mit eingebrachtem Kohlenstoffpulver. Platten dieser Art sind preiswert herzustellen und eignen sich für bestimmte in diesen Schriften geschilderte Anwendungen. In einem weiteren Fall wird ein strangförmiges Heizelement in einer zement- oder asphalthaltigen Platte mäanderförmig abgelegt, JP 7106057. Hier wird ein viellagiger Plattenaufbau beschrieben, der einen beträchtlichen Herstellungsaufwand erfordert. Der Nachteil der in diesen sechs Schriften beschriebenen Platten besteht auch darin, dass sie sich für leicht sauber zu haltende (Wohn-)Räume wegen einer fehlenden glatten Oberfläche nicht eignen.

In anderen Fällen werden eine oder mehrere elektrisch leitende Komponenten z.B. einem Kunststoff oder Elastomer u.a. Komponenten beigemischt. Solche Mischungen werden geformt und mit unterschiedlichen Methoden gehärtet. Als Produkte werden mehr oder weniger flexible Platten mit einer Kunststoffmatrix beschrieben. Nach JP 9260035 werden Kohlenstofffasern in eine viellagige Matte mit einer Kunststoffmatrix eingearbeitet. Nach JP 6313570 wird Ruß als elektrisch leitfähige Komponente in einer viellagigen Platte eingesetzt.
Die Abfolge der in solchen Platten notwendigen Schichten muss während der Fertigung gesichert werden. Es darf beispielsweise nicht eintreten, dass eine eher flüssige Schicht von eher festen Schichten abgleitet. Auch im fertigen (gehärteten) Zustand bestehen Risiken, z.B. durch Delaminieren; so entstandene Risse können den Wärmefluss von der Heizleiterschicht zum Raum hin erheblich beeinträchtigen. Generell muss man bei Kunststoffplatten mit eher höheren Wärmeübergangswiderständen von der Platte zum Raum hin rechnen als bei erfindungsgemäßen keramischen Platten.

In einer anderen Gruppe von Schriften werden elektrisch leitfähige, keramische, heterogene, auch glasierte Materialien behandelt, die Oxide, Carbide, manchmal (refraktäre) Metalle und Kohlenstoffe enthalten, auch in der Klasse der IPC C04B erfasst. Vielfach werden solche Materialien für stabförmige Heizleiter, s. GB 2 045 737 oder RU 2 106 325, oder Tiegel, s. GB 348 149, eingesetzt. Diese Gruppe von Materialzusammensetzungen wird jedoch aus der Betrachtung ausgeschlossen, da sie für Hochtemperaturprozesse vorgesehen ist, etwa für das Gießen von Metallen, was sich auch in der zugehörigen Klasse der IPC B22D niederschlägt. Es sind keine Schriften bekannt, nach denen mit solchen Materialien die elektrische Beheizung von Räumen bei etwas mehr als Raumtemperatur vorgenommen werden sollte.

Eine andere Gruppe von Bauteilen, die in Böden, Wänden oder Decken von Räumen als Raumheizungen in Form elektrischer Widerstandselemente eingesetzt werden, sind die oben schon genannten keramischen Fliesen.
Nach der Schrift. FR 2 681 753 wird eine Lage keramischer Fliesen mit einer Lage eines flächigen Heizelementes aus Kohlenstofffasern in einem System zusammengefasst. Jede der beiden Lagen wird handwerklich in einem eigenen Schritt auf die vorbereitete Raumfläche aufgebracht. Im Falle der Schriften DE 34 33 667, DE 34 33 703, DE 36 03 233 und DE 37 10 626 tragen die keramischen Fliesen auf den der Sichtseite gegenüber liegenden rückwärtigen Seiten eine (vollflächige) Beschichtung, die einen elektrischen Widerstand darstellt. Dieser kann bei Stromdurchgang die auf den Raumflachen verlegten Fliesen und den angrenzenden Raum beheizen. In jedem Falle bestehen solche Fliesen aus drei Lagen: aus der Glasur auf der Sichtseite, aus dem oxidkeramischen Scherben in der Mitte und aus der Widerstandsbeschichtung auf der Rückseite.
Bei anderen Lösungen mit gleich vielen Lagen (drei) wird ein Widerstandsheizelement auf der der. Sichtseite gegenüber liegenden rückwärtigen Seite einer keramischen Fliese aufgeklebt, siehe Patentschrift DE 40 36 848 oder EP 0 049 496. Der Aufwand für die Herstellung solcher vielschichtiger Elemente ist beträchtlich.

Die Aufgabe der dieser Patentanmeldung zugrunde liegenden Erfindung war es deshalb, einen einfacheren Aufbau für einen elektrisch leitenden, im wesentlichen aus einer keramischen Platte und einer darauf befindlichen glatten Schutz- und Dekorationsschicht bestehenden flächigen Formkörper zum Belegen von Böden, Wänden oder Decken von Räumen anzugeben. Ein solcher Formkörper soll zur Beheizung von Räumen mittels direktem Durchgang von elektrischem Strom dienen.
Eine weitere Aufgabe bestand darin, die Trägheit des Heizsystems durch die Reduzierung der aufzuheizenden Masse sowie die Wärmeübergangswiderstände zu verbessern.

Die Aufgabe wird dadurch gelöst, dass die eigentliche Platte des-Formkörpers der eingangs genannten Art Kohlenstoff enthält. Die eigentliche Platte des Formkörpers kann vollständig oder anteilig aus Kohlenstoff bestehen. Die Herstellung solcher anteilig aus Kohlenstoff bestehender keramischer Formkörper entspricht den aus der Oxidkeramik bekannten Techniken, die Herstellung von vollständig aus. Kohlenstoff bestehenden keramischen Formkörpern ist z.B. in ULLMANN'S ENCYCLOPEDIA OF INDUSTRIAL CHEMISTRY, Vol. A5, VCH Verlagsgesellschaft mbh, Weinheim, 1986, S. 103 bis 113 beschrieben, wobei im vorliegenden Fall der Graphitierungsschritt entfällt.

Die oben beschriebenen Formkörper sind nachteilig, weil sie komplexe und vielfältige Aufgaben erfüllen sollen, weil sie mindestens dreilagig sind und weil oftmals mehrere Lagen von unterschiedlichen Elementen auf den Untergrund aufzubringen sind. Um solche Nachteile auszuschließen, wird im Folgenden der erfindungsgemäße Formkörper näher offenbart. Seine Vorteile bestehen in einem nur zweilagigen Aufbau, nämlich der keramischen Platte und der darauf befindlichen glatten Schutz- und Dekorationsschicht und es ist nur eine Lage dieses flächigen Formkörpers auf den Untergrund aufzubringen. Mit diesem erfindungsgemäßen Formkörper werden einige der eingangs genannten Anforderungen erfüllt:
- Bereitstellung ausreichender mechanischer Stabilität,
- Beheizbarkeit des Raumes,
- Isolierung von Personen gegen elektrischen Strom,
- Bereitstellung von zweckmäßigen Nutzflächen (Begehbarkeit= Strapazierfestigkeit; Nassfestigkeit; gewünschte optische Wirkung der Wände, Helligkeit der Decke; usw.).

Da die konventionellen oxidischen Materialien, aus denen Fliesen üblicherweise bestehen, Nichtleiter sind, sind sie auch als Heizleiter ungeeignet. Kohlenstoffe, insbesondere Graphite, werden jedoch als Heizleiter - vorwiegend in der Hochtemperaturtechnik - eingesetzt. Allerdings liegen die spezifischen elektrischen Widerstände der Graphite meist unter 10 µΩm. Diese Eigenschaft bedingt, dass ein aus Graphit gefertigter Widerstand entweder einen kleinen Querschnitt haben sollte oder besonders lang sein sollte, um technisch und wirtschaftlich interessanten Lösungen für einen Heizleiter zu erhalten. Höhere spezifische elektrische Widerstände haben Kohlenstoffwerkstoffe, die nicht graphitiert sind, die aber eine Verkokung durchlaufen haben, auch "Hartbrandkohlenstoffe" genannt. Solche Hartbrandkohlenstoffe sind auch wegen des geringeren Herstellungsaufwandes preiswürdiger als Graphité. Hartbrandkohlenstoffe sind eine mögliche Ausführung des mechanisch stabilen Substrates des erfindungsgemäßen flächigen Formkörpers.

Um die gewünschten höheren spezifischen elektrischen Widerstände als bei Graphiten zu erhalten kann auch ein ganz anderer Weg beschritten werden. Man stellt Mischwerkstoffe aus keramischen Oxiden und Kohlenstoffen her. Weitere Additive wie Carbide, Nitride oder refraktäre Metalle sind auch für solche Mischwerkstoffe bekannt, wie im oben erwähnten Stand der Technik beschrieben, z.B. GB 2 045 737. Die in solchen keramischen Mischwerkstoffen enthaltenen Kohlenstoffe können von sehr unterschiedlicher Beschaffenheit sein. Wegen der Verschiedenartigkeit des Aufbaus der Mischwerkstoffe kann zur Erzielung der gewünschten Eigenschaften - insbesondere spezifischer elektrischer Widerstand und mechanische Festigkeit - der Gehalt an Kohlenstoff im Mischwerkstoff in einem weiten Bereich variieren. Für den erfindungsgemäßen flächigen Formkörper sind Mischwerkstoffe mit Kohlenstoffgehalten von 10 bis 100 Gew.% eine weitere mögliche Ausführung des mechanisch stabilen Substrates.

Sowohl der Hartbrandkohlenstoff als auch der Mischwerkstoff, kann die eigentliche Platte des Formkörpers bilden. Die Platte ist der Grundkörper des erfindungsgemäßen Formkörpers. Die Platte bringt die ausreichende mechanische Stabilität und sie bildet den elektrischen Widerstand, der sich bei direktem Durchgang von elektrischem Strom erwärmt und so als Raumheizung genutzt werden kann.

Nicht nur der Gehalt an Kohlenstoff in der Platte ist für die gewünschten Eigenschaften von Bedeutung sondern auch die Art und Form des Kohlenstoffes. Da praktisch alle Kohlenstoffe elektrisch leitend sind, können sie alle in der Platte enthalten sein. Basis der verschiedenen Kohlenstoffe sind Erdöl oder Kohle bzw. Anthrazit. Während Anthrazit direkt verwendet werden kann, werden aus Erdöl oder Kohle zunächst Kokse erzeugt. Je nach Genese und Herstellung variiert der spezifische elektrische Widerstand des Kokses. Die elektrische Leitfähigkeit von Koksen ist generell niedriger als die der künstlich hergestellten Elektrographite oder der Naturgraphite. Als weitere Formen des Kohlenstoffes und der in den erfindungsgemäßen Formkörpern einzusetzenden Kohlenstoffe sind zu nennen: Ruß oder Kohlenstoff- bzw. Graphitfasern. Alle diese Kohlenstoffarten können jede für sich oder in Mischungen miteinander in der Platte enthalten sein. Die preiswerten Kohlenstoffe wie Anthrazit und Kokse werden bevorzugt eingesetzt.

Besteht die Platte zu 100 Gew.% aus Kohlenstoff, so ist die Form oder Gestalt der Kohlenstoffarten für den spezifischen elektrischen Widerstand des erfindungsgemäßen Formkörpers von eher untergeordneter Bedeutung. Ist der Kohenstoff jedoch nur anteilig in der Platte neben z.B. oxidischen Bestandteilen enthalten, so ist die Gestalt des einzelnen Kohlenstoffteilchens wichtig. Bei gleichem Kohlenstoffgehalt einer Platte aus Mischwerkstoff haben winzige kugelförmige Kohlenstoffteilchen - wie etwa Ruß - weniger Kontakte untereinander als langgestreckte Kohlenstoffteilchen - wie etwa Carbonfasern. Bei sich in der Platte aus Mischwerkstoff berührenden Kohlenstoffteilchen hat die Platte eine bedeutend bessere elektrische Leitfähigkeit bzw. einen bedeutend niedrigeren spezifischen elektrischen Widerstand als bei gegeneinander isolierten Kohlenstoffteilchen. Das bedeutet, Platten mit kugeligen Kohlenstoffteilchen haben höhere, Platten mit nadeligen Kohlenstoffteilchen haben niedrigere spezifische elektrische Widerstände.

Für die Anwendung des flächigen Formkörpers zum Belegen der Innenflächen von Räumen und zum Beheizen dieser Räume eignen sich solche Formkörper, deren Platten einen spezifischen elektrischen Widerstand von 10 bis 500 µΩm, vorzugsweise 20 bis 100 µΩm aufweisen. Anhand der oben erläuterten Arten und Formen der Kohlenstoffe und der Plattenarten aus "Hartbrandkohlenstoff" und aus "Mischwerkstoff" wird klar, dass es eine große Bandbreite von Rezepturen für die erfindungsgemäßen flächigen Formkörper gibt, um den erwünschten spezifischen elektrischen Widerstand zu erzielen.

Damit der erfindungsgemäße Formkörper die beiden anderen Anforderungen
- Bereitstellung von zweckmäßigen Nutzflächen (Begehbarkeit= Strapazierfestigkeit; Nassfestigkeit; gewünschte optische Wirkung der Wände, Helligkeit der Decke; usw.) und
- Isolierung von Personen gegen elektrischen Strom erfüllen kann, wird die Platte mit einer glatten Schutz- und Dekorationsschicht versehen. Dies gilt sowohl für Platten aus Hartbrandkohlenstoff als auch für Platten aus Mischwerkstoffen.

Besteht die glatte Schutz- und Dekorationsschicht aus einer üblichen oxidischen Glasur mit Bestandteilen aus der Gruppe SiO₂, Al₂O₃, MgO, CaO, Na₂O, K₂O und anderen üblichen, auch farbgebenden Oxiden, so ist es auf Grund dieser Zusammensetzung klar, dass diese Glasur ein Nichtleiter ist und damit elektrisch isolierend wirkt. Je nach Eigenschaften und Zusammensetzung der Platte (aus Hartbrandkohlenstoff oder aus Mischwerkstoff) ist die Zusammensetzung der Glasur mit ihren oxidischen Bestandteilen anzupassen.

Auch die meisten Kunststoffe sind gute elektrische Isolatoren, weshalb sich diese Gruppe von Werkstoffen als Schutz- und Dekorationsschicht anbietet. Es sind allerdings solche Kunststoffe aus der Anwendung als Schutz- und Dekorationsschicht auszuschließen, die nicht ausreichend strapazierfähig sind. Es haben sich Schichten von 0,3 bis 4 mm Stärke aus der Gruppe der harten Kunststoffe wie Epoxid-, Phenol-, Melaminharz oder deren Mischungen bewährt, womit andere Kunststoffe für diese Anwendung nicht ausgeschlossen werden sollen.

Die Platte des erfindungsgemäßen Formkörpers könnte von der Schutz- und Dekorationsschicht allseitig umschlossen sein, sieht man von der Durchbrechung dieser Schicht durch die notwendige elektrische Kontaktierung der Platte ab. Wegen bestimmter Herstellungstechniken (Tauchen) böte sich eine solche umfassende Beschichtung an. Sie ist jedoch materialintensiver als eine im wesentlichen einseitige Beschichtung des flächigen Formkörpers, bei der die schmalen Kanten vollständig oder anteilig mit der Schutz- und Dekorationsschicht abgedeckt werden. Der im wesentlichen einseitig beschichtete flächige Formkörper hat auch den Vorteil, dass dieser Körper wegen,der Porosität der Platte beim Verlegen im frischen und feuchten Mörtelbett etwas Wasser aus dem Mörtel anzieht und dadurch gut haftet.

Die im wesentlichen einseitig beschichteten flächigen Formkörper werden als Belag von Raumflächen eingesetzt. Wenn sie gleichzeitig als Raumheizung eingesetzt werden sollen, ist es zweckmäßig, nicht jeden einzelnen Formkörper in einen elektrischen Stromkreis als ohmschen Widerstand einzubinden und jeden einzelnen Formkörper für sich bezüglich Strommenge und anliegender Spannung zu regeln, sondern mehrere Formkörper in einem Stromkreis zusammenzufassen.

Daher werden die flächigen Körper (Widerstände) untereinander elektrisch verbunden und es wird in der Regel eine Serienschaltung von einzelnen Widerständen hergestellt, was in besonderen Fällen eine Parallelschaltung oder eine Kombination von Serien- und Parallelschaltung nicht ausschließt. Der Gesamtwiderstand in einem Stromkreis setzt sich bei Serienschaltung aus der Summe der hintereinander geschalteten Einzelwiderstände (einzelne Formkörper) zusammen. Die Heizleistung wird so ausgelegt, dass sie bis zu 200 W/m² beträgt.

Durch die folgenden Figuren wird die Erfindung beispielhaft weiter erläutert. Es zeigen:
- Fig. 1: Zweilagiger flächiger Formkörper
- Fig. 2: Anordnung von elektrisch miteinander verbundenen Formkörpern

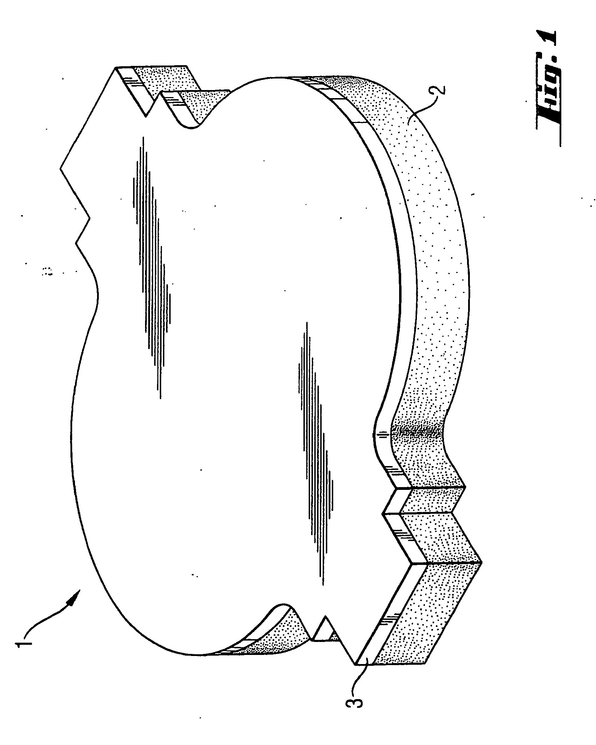

Fig. 1 zeigt einen zweilagigen flächigen Formkörper 1 mit einer keramischen Platte 2, der Kohlenstoff enthält. Die Platte Scherben ist vollflächig mit einer glatten Schutz- und Dekorationsschicht 3 versehen.

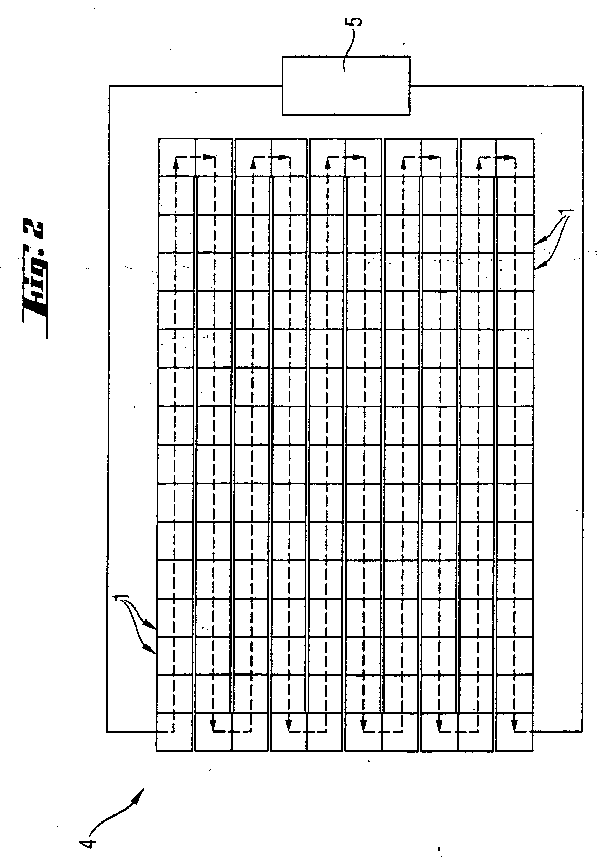

Fig. 2 zeigt eine Anordnung 4 von flächigen Formkörpern 1, die elektrisch miteinander verbunden sind und die in diesem Falle in Serie geschaltet sind. Diese Serie von ohmschen Widerständen wird an eine geeignete Stromquelle 5 (Gleich- oder Wechselstrom) angeschlossen.

Im Folgenden wird ein Beispiel gegeben, in dem die Platte 2 zu 100 Gew.% aus Kohlenstoff bestand.
Als Rohstoff setzte man einen Koks der Fa. Marathon /Burghausen Deutschland in einer Feinheit von 20 µm mittlerem Korndurchmesser ein. Sein Anteil an der Gesamtmischung betrug 43,5 Gew.-%. 18,5 Gew.-% Elektrographit mit 30 µm mittlerem Korndurchmesser ergänzten die Trockenstoffe. Als plastisches Bindemittel kamen 38 Gew.-% Steinkohlenteerpech mit einem Erweichungspunkt von 120°C hinzu. Diese Rohstoffe wurden bei 190°C für 45 Minuten gemischt. Aus der so hergestellten, bei Raumtemperatur krümeligen Mischung wurden mit Hilfe einer Gesenkpresse Platten geformt und verdichtet. Es folgte eine Verkokung bei bis zu 900°C. Die Platten wurden auf Endmaße von 300 x 300 x 5 mm bearbeitet.

An den verkokten Platten konnten die folgenden charakteristischen Daten ermittelt werden: Die Rohdichte betrug 1,64 g/cm³, die Biegefestigkeit 50 N/mm² und der spezifische elektrische Widerstand 40 µΩm.

Ein Beispiel für die Anordnung erfindungsgemäßer Formkörper auf einer Raumfläche zeigt die Figur 2.

### Bezugszeichenliste

- 1: Flächiger Formkörper
- 2: Kohlestoffhaltige keramische Platte
- 3: Glatte Schutz- und Dekorationsschicht
- 4: Anordnung von flächigen Formkörpern
- 5.: Stromquelle

## Patentansprüche

1. Keramische, elektrisch leitende, aus einer Kohlenstoffmatrix bestehende Platte (2), die mit einer darauf befindlichen glatten Schutz- und Dekorationsschicht (3) einen zweilagigen flächigen Formkörper (1) als Dekorations- und elektrisches Widerstandsheizelement für die Innenflächen von Räumen bildet,
**dadurch gekennzeichnet, dass**
die Platte (2) einen niedrigen spezifischen elektrischen Widerstand von 20 bis 100 µΩm hat.

2. Formkörper (1) nach Anspruch 1,
**dadurch gekennzeichnet, dass**
die Platte (2) zwischen 10 und 100 Gew.-% Kohlenstoff enthält.

3. Formkörper (1) nach Ansprüchen 1 und 2,
**dadurch gekennzeichnet, dass**
die Platte (2) Kohlenstoffe aus der Gruppe Petrolkoks, Steinkohlenkoks, Anthrazit, Ruß, Elektrographit, Naturgraphit, Kohlenstofffasern oder Graphitfasern enthält.

4. Formkörper (1) nach Ansprüchen 1 bis 4,
**dadurch gekennzeichnet, dass**
die glatte, im wesentlichen nur auf der Sichtseite des flächigen Formkörpers befindliche Schutz- und Dekorationsschicht (3) elektrisch isolierend ist.

5. Formkörper (1) nach Anspruch 5,
**dadurch gekennzeichnet, dass**
die glatte Schutz- und Dekorationsschicht (3) entweder Kunststoffe aus der Gruppe der harten Kunststoffe wie Epoxid-, Phenol-, Melaminharz oder Mischungen davon oder oxidische Glasuren mit Bestandteilen aus der Gruppe SiO₂, Al₂O₃, MgO, CaO, Na₂O, K₂O und anderen üblichen, auch farbgebenden Oxiden enthält.

6. Anordnungen (4) von auf Böden, Wänden oder Decken von Räumen angebrachten Formkörpern (1) nach einem oder mehreren der vorgenannten Ansprüche,
**dadurch gekennzeichnet, dass**
diese Anordnungen (4) aus Formkörpern elektrisch miteinander verbunden sind.

## Claims

1. A ceramic, electrically conducting plate (2) consisting of a carbon matrix, which together with a smooth protective and decorative layer (3) situated thereon forms a double-layer, two-dimensional moulded body (1) as a decorative and electrical resistance heating element for the inner surfaces of rooms, **characterised in that** the plate (2) has a low specific electrical resistance of 20 to 100 µΩm.

2. A moulded body (1) according to claim 1, **characterised in that** the plate (2) contains between 10 and 100 wt.% of carbon.

3. A moulded body (1) according to claims 1 and 2, **characterised in that** the plate (2) contains forms of carbon from the group comprising petroleum coke, mineral coke, anthracite, carbon black, electro-graphite, natural graphite, carbon fibres or graphite fibres.

4. A moulded body (1) according to claims 1 to 4, **characterised in that** the smooth protective and decorative layer (3) present substantially only on the visible side of the two-dimensional moulded body is electrically insulating.

5. A moulded body (1) according to claim 5, **characterised in that** the smooth protective and decorative layer (3) contains either plastics from the group comprising rigid plastics such as epoxide, phenol, melamine resin or mixtures thereof, or oxidic glazings with constituents from the group SiO₂, Al₂O₃, MgO, CaO, Na₂O, K₂O and other conventional, also colour-imparting oxides.

6. Arrangements (4) of moulded bodies (1) according to one or more of the preceding claims, applied to floors, walls or ceilings of rooms, **characterised in that** these arrangements (4) of moulded bodies are electrically connected to one another.

## Revendications

1. Plaque (2) céramique, électriquement conductrice, constituée d'une matrice en carbone, qui forme, avec une couche lisse de protection et de décoration (3) déposée en surface, un corps moulé (1) plat à deux couches servant d'élément de décoration et d'élément de chauffage électrique par effet Joule pour les surfaces intérieures de locaux,
**caractérisée en ce que**
la plaque (2) a une résistance électrique spécifique faible de 20 à 100 µΩm.

2. Corps moulé (1) selon la revendication 1,
**caractérisé en ce que**
la plaque (2) contient entre 10 % et 100 % en poids de carbone.

3. Corps moulé (1) selon les revendications 1 et 2,
**caractérisé en ce que**
la plaque (2) contient des carbones du groupe constitué de coke de pétrole, de coke de houille, d'anthracite, de noir de carbone, d'électrographite, de graphite naturel, de fibres de carbone ou de fibres de graphite.

4. Corps moulé (1) selon les revendications 1 à 4,
**caractérisé en ce que**
la couche lisse de protection et de décoration (3), se trouvant uniquement pour l'essentiel sur le côté visible du corps moulé plat, est électriquement isolante.

5. Corps moulé (1) selon la revendication 5,
**caractérisé en ce que**
la couche lisse de protection et de décoration (3) contient soit des matières plastiques du groupe des matières plastiques dures comme la résine d'époxyde, de phénol, de mélamine ou des mélanges des ces matières soit des glaçures oxydiques avec des constituants du groupe constitué de SiO₂, Al₂O₃, MgO, CaO, Na₂O, K₂O et d'autres oxydes usuels également colorants.

6. Dispositions (4) de corps moulés (1) appliqués sur des sols, des murs ou des plafonds de locaux selon l'une ou plusieurs des revendications précédentes,
**caractérisées en ce qu'**
ces dispositions (4), constituées de corps moulés, sont reliées électriquement entre elles.
